# FASCICULE DE BREVET EUROPEEN

(11) **EP 0 384 832 B1**
(45) Date de publication et mention de la délivrance du brevet: **15.09.1993**
(21) Numéro de dépôt: 90400465.2
(22) Date de dépôt: 20.02.1990
(51) Int. Cl.: A01F 12/44

(54) **Moissonneuse-batteuse à séparateur de grains annexe**
Mähdrescher mit angehängtem Kornabscheider
Combine harvester with a grain separator annexed thereto

(30) Priorité: 20.02.1989 FR 8902196
(43) Date de publication de la demande: 29.08.1990
(73) Titulaire: Zachary, Alain, F-08400 Vouziers (FR)
(72) Inventeur: Zachary, Alain, F-08400 Vouziers (FR)
(74) Mandataire: Clanet, Denis

(56) Documents cités:
- EP-A- 0 197 292
- DE-C- 866 863
- FR-A- 522 278
- FR-A- 1 215 745
- FR-A- 1 227 210
- FR-A- 2 315 841
- FR-A- 2 496 398
- NL-A- 6 813 103
- US-A- 3 348 676
- US-A- 3 603 063
- US-A- 4 051 856

## Description

La présente invention concerne une moissonneuse-batteuse à séparateur de grain annexe.

Sans décrire intégralement une moissonneuse-batteuse, on rappellera que ces machines comportent, d'avant en arrière, dans le sens de progression, une barre de coupe, un convoyeur élévateur des matières récoltées, un dispositif de battage, puis un ou plusieurs séparateurs destinés à séparer le grain de la paille ou autres déchets, à la sortie du dispositif de battage.

Le contre-batteur du dispositif de battage est généralement réalisé sous la forme d'un carter ajouré, permettant la chute de grain et de menue paille hors du dispositif de battage.

Dans les machines actuelles, ces grains et cette menue paille extraites du dispositif de battage tombent sur une table réceptrice, généralement animée d'un mouvement alternatif, afin d'assurer leur séparation. Par ailleurs, la récolte battue sortant du dispositif de battage traverse un dispositif de séparation primaire, constitué par exemple par des secoueurs alternatifs, et les grains et la menue paille qui en sont extraits sont également envoyés sur cette table réceptrice.

On connaît, du DE-C-866 863 qui divulgue les caractéristiques du préambule de la revendication 1, ou encore du NL-A-68 13 103, des machines dans lesquelles le stator de contre batteur est ajouré et comprenant sous ce stator ajouré un compartiment de séparation muni de moyens de séparation aérauliques.

Dans ces machines connues, on observe toutefois que le flux d'air traverse la majeure partie du compartiment sous forme d'un faisceau divergent, ce qui ne conduit pas à une bonne séparation du grain et des matières qui l'accompagnent.

De plus, le flux d'air sortant du compartiment est, selon le cas, canalisé pour être évacué (DE-C-866 863) ou admis simplement dans le reste de la machine (NL-A-68 13 103).

Enfin, certains déchets plus lourds peuvent tomber avec les grains et ne sont pas séparés.

Afin de pallier ces inconvénients, l'invention prévoit une moissonneuse-batteuse comprenant un dispositif de battage de matières récoltées composé d'un rotor de batteur rotatif et d'un stator de contre batteur fixe et ajouré comprenant sous ledit stator ajouré, un compartiment de séparation muni de moyens de séparation aérauliques, de parois latérales arrière et avant convergentes et d'un fond en forme d'auge, les moyens de séparation aérauliques comportant un orifice d'injection d'air pulsé dans l'une des parois latérales et un orifice d'évacuation dans l'autre paroi, disposés de manière à déterminer un flux d'air sensiblement horizontal à travers le compartiment et au-dessus du fond de ce dernier, caractérisée en ce qu'il est prévu un peigne dans ledit compartiment depuis l'une desdites parois latérales au-dessus de l'orifice d'injection jusqu'à l'orifice d'évacuation ; les tiges dudit peigne prenant naissance sur la paroi latérale arrière du compartiment et au-dessus de l'orifice d'injection et se terminant sensiblement horizontalement dans l'orifice d'évacuation.

Ainsi, grâce à l'invention, la partie du grain libéré au sein même du dispositif de battage pourra être directement récupérée et séparée d'avec les menues pailles et autres déchets qui l'accompagnent, cette séparation annexe venant, pratiquement sans consommation supplémentaire, se soustraire de la séparation secondaire de battage. On pourra donc réduire la taille de ces séparateurs et/ou réduire la puissance et la consommation nécessaires à leur actionnement.

Les détails et avantages de l'invention apparaîtront clairement à la lecture de la description qui va suivre, en se référant aux dessins annexés, dans lesquels :
la figure 1 est une vue en coupe schématique d'une moissonneuse-batteuse incorporant l'invention ; et,
- la figure 2 est une vue en coupe similaire illustrant une variante.

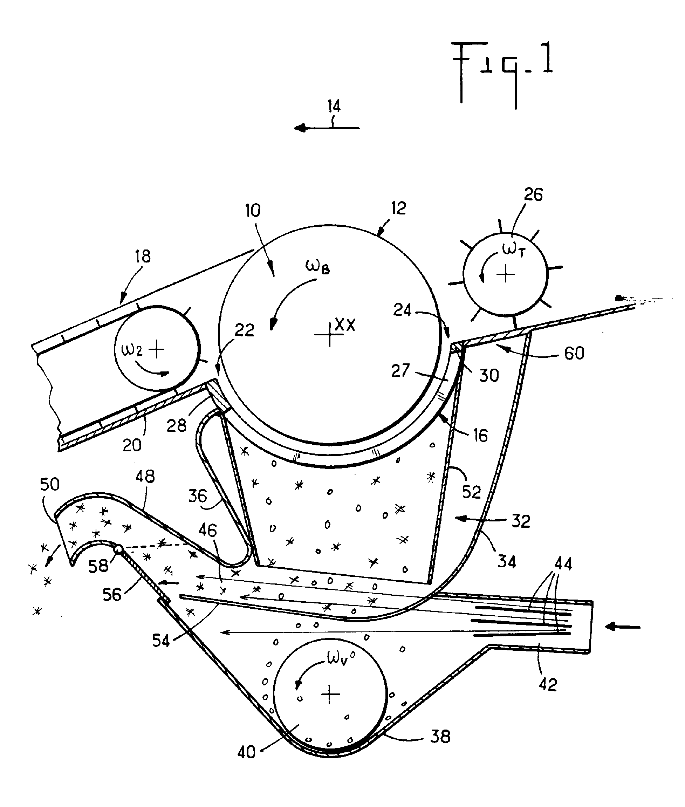

L'ensemble illustré à la figure 1 comprend essentiellement le dispositif de battage 10 d'une moissonneuse batteuse, constitué d'un rotor de batteur 12, entraîné en rotation à haute vitesse autour d'un axe XX sensiblement horizontal et perpendiculaire à la direction d'avance de la machine, symbolisée par la flèche 14 dirigée vers la gauche à la figure, et d'un stator contre batteur 16 formé d'éléments fixes entourant le batteur à courte distance sur environ un tiers de sa circonférence inférieure.

A la gauche, c'est-à-dire en amont, du dispositif de battage 10 aboutit un convoyeur élévateur 18 qui fait progresser sur une table 20 vers le haut jusqu'à l'entrée 22 du dispositif de battage un lit de matières moissonnées par une barre de coupe, non représentée.

Comme connu, les matières pénètrent entre le batteur 12 et le contre batteur 16 et subissent un battage, en raison de la vitesse élevée du rotor de batteur, dont l'effet est de séparer les grains des épis et du reste des pailles ou autres déchets, comme par exemple, les rafles s'il s'agit du maïs.

L'ensemble des matières battues ressort à l'arrière 24 du dispositif de battage pour être dirigé au moyen d'un tambour de dégagement 26 vers des dispositifs de séparation classiques qui n'ont pas été représentés.

Le stator de contre-batteur est réalisé classiquement sous la forme d'un carter ajouré. En pratique, il est constitué par une grille qui comprend des barres 27 cintrées depuis une barre d'entrée 28 jusqu'à une barre de sortie 30, les barres étant disposées parallèlement les unes aux autres sur toute la longueur du rotor 12 de batteur et espacées les unes des autres d'un intervalle choisi, ni trop étroit pour permettre la chute des grains, ni trop large pour éviter la chute de tiges entières ou autres déchets de grande taille, comparée à la taille des grains.

Sous la grille 16 est monté un compartiment 32 de séparation annexe, comprenant des parois latérales arrière 34 et avant36, généralement convergentes du haut vers le bas, et un fond 38 en forme d'auge dans lequel est monté un extracteur de grain à vis d'Archimède 40, l'axe de la vis étant sensiblement horizontal et perpendiculaire à la direction d'avance de la machine.

Dans la mesure où des menues pailles ou autres déchets de petite taille traversent également la grille-stator 16, le compartiment de séparation 32 comporte des moyens de séparation aérauliques, sous la forme d'un organe d'injection d'air pulsé par un orifice d'entrée 42 situé latéralement en partie basse de la paroi arrière 34 convergente du compartiment, la direction de soufflage étant sensiblement horizontale et passant légèrement au-dessus de la vis d'extraction 40. L'orifice d'injection 42 est garni de pales de répartition 44 afin de produire un flux d'air régulier.

Face à l'orifice d'injection et en partie basse de la paroi avant convergente 36 du compartiment 32 est ménagé un orifice d'évacuation 46 relié à l'extérieur par un court conduit 48, en pente légèrement montante jusqu'à une embouchure 50.

De la sorte, le grain, les menues pailles et autres déchets traversent au cours de leur chute dans le compartiment 32 un courant d'air régulier sensiblement perpendiculaire à leur direction de chute.

Les éléments légers sont ainsi entraînés vers l'orifice 46 et le conduit 48 d'évacuation, tandis que les grains tombent dans le fond en forme d'auge 38.

Plusieurs plaques ou cloisons verticales 52 sont disposées longitudinalement d'une paroi à l'autre dans le compartiment 32, afin d'empêcher que les grains et autres matières ne se rassemblent à une extrémité du compartiment lorsque la machine se déplace sur un terrain en dévers.

A titre complémentaire, un peigne séparateur 54, de forme générale incurvée est disposé dans le compartiment de séparation 32. Les tiges de peigne prennent naissance sur la paroi arrière 34 du compartiment, et au-dessus de l'orifice d'injection 42 et se terminent sensiblement horizontalement dans l'orifice d'évacuation 46 en passant au-dessus de la vis d'extraction 40 dans une zone balayée par le flux d'air.

Ce peigne retient mécaniquement des tronçons de paille et autres déchets d'une certaine longueur, qui risqueraient de tomber dans l'auge avec le grain sans être déviés par le flux d'air. Par contre, une fois retenus sur les tiges du peigne 54, ces tronçons de paille et autres déchets sont poussés jusqu'aux extrémités des tiges, puis à travers l'orifice 46 et le conduit 48 de sortie par le flux d'air.

Grâce à l'invention, une structure particulièrement simple permet de séparer immédiatement au niveau du batteur 10 la partie du grain libéré dans celui-ci. L'adjonction d'un ventilateur n'est en général pas nécessaire puisque pratiquement la totalité des moissonneuses-batteuses en comportent un, destiné à l'insufflation d'air dans le séparateur final ; il suffira donc de prévoir en sortie du ventilateur existant un conduit de dérivation aboutissant à l'orifice d'injection 42.

Le conduit d'évacuation 48 peut déboucher à l'air libre comme figuré.

La section du conduit d'évacuation 48 peut être adaptée à la taille et la nature des matières éjectées. A cet effet, un volet 56 de la paroi inférieure du conduit est monté pivotant autour d'un axe supérieur 58, entre une position dans laquelle les matières doivent parcourir la totalité du conduit 48, et une position dans laquelle le volet 56 ferme le conduit et démasque une large ouverture de sortie à la naissance du conduit, comme illustré en pointillés.

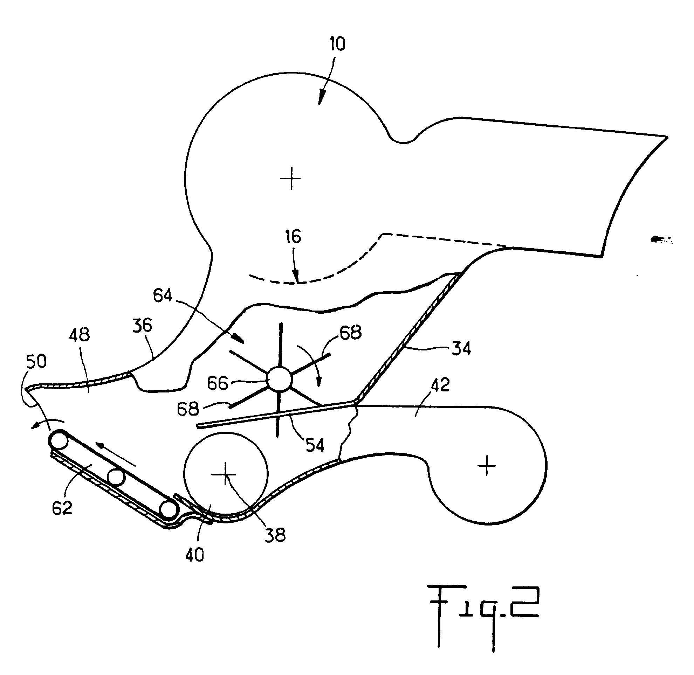

Si l'on a affaire à des matières accompagnées de paille ou déchets relativement denses, et dont la séparation aéraulique est malaisée, on pourra prévoir des organes d'entraînement complémentaires, comme illustré à la figure 2.

L'un des organes d'entraînement consiste en un tapis élévateur 62 placé le long de la paroi inférieure du conduit d'évacuation 48 débutant à proximité de la vis d'Archimède 40 et se terminant au niveau de l'orifice d'évacuation 50.

L'autre organe d'entraînement consiste en un dispositif de type rateau rotatif 64 coopérant avec le peigne 54. Ce dispositif comprend un axe transversal 66 sensiblement horizontal placé au dessus du peigne 54 et doté de multiples doigts 68 en saillie radiale qui passent entre les tiges de peigne 54. Le rateau rotatif 64 est entraîné en rotation dans le sens des aiguilles d'une montre, de telle sorte que ses doigts 68 poussent les pailles ou déchets arrêtés par des tiges de peigne 54 jusqu'à l'extrémité de ces dernières d'où elles tombent sur le tapis élévateur 62 d'évacuation.

On notera que l'efficacité du dispositif selon l'invention peut être renforcée en prévoyant que la table de guidage 60 inférieure qui, partant de la barre arrière 30 de la grille stator 16, passe sous le tambour de dégagement 26, soit également ajourée et débouche également au-dessus du compartiment de séparation 32. Ainsi, une quantité supplémentaire de grain peut être recueillie avant que le mélange de grain et de paille battus ne soit dirigé vers les dispositifs de séparation principaux.

Toute la quantité de grain récupérée dans le compartiment de séparation 32 vient en soustraction de la quantité de grain qui doit être séparée dans les dispositifs de séparation principaux ; ces derniers peuvent être alors d'une taille réduite et/ou actionnés par des organes moteurs de puissance réduite.

On concevra que la direction du flux d'air peut être inversée et orientée d'avant vers l'arrière, au lieu de la direction décrite.

En outre, la grille stator 16 du dispositif de battage pourra être conçue de manière interchangeable, afin de permettre la récolte de céréales de variétés différentes avec la même moissonneuse-batteuse.

Lorsque la machine comporte en outre un séparateur primaire et un séparateur secondaire du grain, le grain ainsi recueilli directement au niveau du batteur est rassemblé avec le grain provenant du séparateur primaire et transféré vers le séparateur secondaire.

Avantageusement, le grain provenant du séparateur primaire est alimenté dans le compartiment de réception du séparateur annexe qui vient d'être décrit, par une goulotte d'entrée située dans la paroi arrière au-dessus du peigne. Ainsi, les grains mélangés à divers débris provenant du séparateur primaire, traverseront également le flux d'air, grâce auquel ils seront débarrassés des débris légers, puis une fois rassemblés avec le grain recueilli en fond de l'auge du séparateur annexe, la totalité des grains sera transférée au séparateur secondaire. Dans la mesure où une première séparation aura été effectuée dans le séparateur annexe, on pourra réduire le dimensionnement du séparateur secondaire et/ou accroître son efficacité.

Enfin, on remarquera que l'ensemble du dispositif qui vient d'être décrit est relativement facilement accessible, en vue de son nettoyage, ou toute autre intervention nécessaire.

## Revendications

1. Moissonneuse-batteuse, comprenant un dispositif de battage (10) de matières récoltées composé d'un rotor (12) de batteur rotatif et d'un stator de contre batteur (16) fixe et ajouré comprenant sous ledit stator ajouré, un compartiment de séparation (32) muni de moyens de séparation aérauliques (42,46,48), de parois latérales arrière (34) et avant (36) convergentes et d'un fond (38) en forme d'auge, les moyens de séparation (46) aérauliques comportant un orifice (42) d'injection d'air pulsé dans l'une des parois latérales (34,36) et un orifice d'évacuation (46) dans l'autre paroi, disposés de manière à déterminer un flux d'air sensiblement horizontal à travers le compartiment (32) et au-dessus du fond (38) de ce dernier, caractérisée en ce qu'il est prévu un peigne (54) dans ledit compartiment depuis l'une desdites parois latérales (34) au-dessus de l'orifice d'injection (42) jusqu'à l'orifice d'évacuation (46) ; les tiges dudit peigne prenant naissance sur la paroi latérale arrière (34) du compartiment (32) et au-dessus de l'orifice d'injection (42) et se terminant sensiblement horizontalement dans l'orifice d'évacuation (46).

2. Moissonneuse-batteuse selon la revendication 1, caractérisée en ce qu'il est prévu un extracteur de grain à vis d'Archimède (40) dans le fond (38) du compartiment de séparation (32).

3. Moissonneuse-batteuse selon l'une des revendications 1 ou 2, caractérisée en ce que le compartiment comporte une pluralité de cloisons verticales (52) s'étendant d'une paroi à l'autre.

4. Moissonneuse-batteuse selon l'une des revendications 5 ou 6, caractérisée en ce qu'il est prévu un conduit d'évacuation (48) en communication avec l'orifice d'évacuation (46).

5. Moissonneuse-batteuse selon la revendication 4, caractérisée en ce que le conduit d'évacuation (48) a une section (46) variable.

6. Moissonneuse-batteuse selon l'une ou l'autre des revendications 4 ou 5, caractérisée en ce qu'elle comprend un tapis élévateur le long de la paroi inférieure du conduit d'évacuation

7. Moissonneuse-batteuse selon l'une quelconque des revendications 1 à 6, caractérisée en ce qu'elle comprend un râteau rotatif comportant une pluralité de doigts en saillie radiale s'étendant entre les tiges de peigne.

## Patentansprüche

1. Mähdrescher mit einer Dreschvorrichtung (10) für gemähte Materialien, die aus einem Rotor (12) in Form einer drehbaren Dreschtrommel und einem Stator in Form einer festen und durchbrochenen Gegendreschtrommel (16) besteht, und die unter dem durchbrochenen Stator eine Trennkammer (32) aufweist, die mit lufttechnischen Trennmitteln (42, 46, 48), konvergenten hinteren (34) und vorderen (36) Seitenwänden und mit einem muldenförmigen Boden (38) versehen ist, wobei die lufttechnischen Trennmittel (46) eine Öffnung (42) zur Lufteinspritzung in einer der Seitenwände (34, 36), sowie eine Öffnung zum Luftablaß in der anderen Wand aufweisen, wobei die Öffnungen so angeordnet sind, daß ein horizontaler Luftstrom durch die Kammer (32) und oberhalb des Kammerbodens (38) fließt,
**dadurch gekennzeichnet**, daß
ein Kamm (54) in der Kammer vorgesehen ist, der sich von einer der Seitenwände (34) oberhalb der Einspritzöffnung (42) bis zur Ablaßöffnung (46) erstreckt, wobei die Zacken des Kammes an der hinteren Seitenwand (34) der Kammer (32) und über der Einspritzöffnung (42) ihren Ausgang nehmen und in horizontaler Richtung in der Ablaßöffnung (46) enden.

2. Mähdrescher nach Anspruch 1,
dadurch gekennzeichnet, daß ein Kornextraktor in Form einer Archimedischen Schraube (40) auf dem Boden (38) der Trennkammer (32) vorgesehen ist.

3. Mähdrescher nach einem der Ansprüche 1 oder 2,
dadurch gekennzeichnet, daß die Kammer mehrere vertikale, sich von einer Wand zur anderen erstreckenden Trennwände (52) aufweist.

4. Mähdrescher nach einem der Ansprüche 1 bis 3,
dadurch gekennzeichnet, daß eine Ablaßleitung (48) in Verbindung mit der Ablaßöffnung (46) vorgesehen ist.

5. Mähdrescher nach Anspruch 4,
dadurch gekennzeichnet, daß die Ablaßleitung (48) einen variablen Querschnitt (46) hat.

6. Mähdrescher nach einem der Ansprüche 4 oder 5,
dadurch gekennzeichnet, daß er ein Förderband entlang der unteren Wand der Ablaßleitung aufweist.

7. Mähdrescher nach einem der Ansprüche 1 bis 6,
dadurch gekennzeichnet, daß er einen drehbaren Rechen mit mehreren radial vorspringenden und sich zwischen den Zähnen des Kammes erstreckenden Fingern aufweist.

## Claims

1. Combine harvester, comprising a threshing device (10) for the crop materials made of a rotary thresher rotor (12) and of a fixed and perforated counter-thresher stator (16) comprising under said perforated stator, a separator section (32) provided with blower separator means (42, 46, 48), convergent rear (34) and front (36) lateral walls and a trough shaped bottom (38), the blower separator means (46) comprising an orifice (42) for injecting pulsed air into one of the lateral walls (34, 36) and an exhaust orifice (46) in the other wall, disposed such that a substantially horizontal flow of air is determined throughout the section (32) and above the bottom (38) thereof, characterized in that a comb (54) is provided in said section, extending from one of said lateral walls (34) above the injection orifice (42) to the exhaust orifice (46); the rods of said comb originating from the rear lateral wall (34) of the section (32) and above the injection orifice (42) and ending substantially horizontally in the exhaust orifice (46).

2. Combine harvester according to claim 1, characterized in that a grain extractor (40) with a lifting screw is provided at the bottom (38) of the separator section (32).

3. Combine harvester according to one of claims 1 or 2, characterized in that the section includes a plurality of vertical partitions (52) extending from one wall to another.

4. Combine harvester according to one of claims 1 to 3, characterized in that an exhaust duct (48) is provided which duct communicates with the exhaust orifice (46).

5. Combine harvester according to claim 4, characterized in that the exhaust duct (48) is of variable cross-section (46).

6. Combine harvester according to either one of claims 4 or 5, characterized in that it comprises an elevator belt along the lower wall of the exhaust duct.

7. Combine harvester according to any one of claims 1 to 6, characterized in that it comprises a rotary rake made of a plurality of radially projecting fingers which extend between the rods of the comb.
